# EUROPÄISCHE PATENTANMELDUNG

(11) **EP 0 967 406 A1**
(43) Veröffentlichungstag der Anmeldung: **29.12.1999**
(21) Anmeldenummer: 99111466.1
(22) Anmeldetag: 12.06.1999
(51) Int. Cl.: F16D 43/202

(54) **Rotationskupplung mit Drehmomentenbegrenzung**

(30) Priorität: 27.06.1998 DE 19828791
(71) Anmelder: Rothenberger Werkzeuge AG, 60327 Frankfurt (DE)
(72) Erfinder: Hellebrandt, Gerhard, 65843 Sulzbach (DE); Goldbach, Gerhard, 65520 Bad Camberg (DE)
(74) Vertreter: Zapfe, Hans, Dipl.-Ing.

(57) **Zusammenfassung**

Eine Rotationskupplung zur Drehmomentenbegrenzung zwischen einer Antriebswelle (2) und einer Abtriebswelle (3) besitzt einen Antriebsdrehkörper (4) und einem Abtriebsdrehkörper (5), wobei an dem einen Drehkörper (5) mindestens ein Rastelelement (6, 7) festgelegt und in dem anderen Drehkörper (4) mindestens ein Schiebekörper (12, 13) gelagert ist, der mittels einer vorgespannten Feder (14) mit dem mindestens einen Rastelelement (6, 7) zusammenwirkt. Der Schiebekörper (12, 13) besitzt je eine vorwärtswirkende und eine rückwärtswirkende Steuerfläche. In jedem Schiebekörper (12, 13) ist lagefest ein Kulissenstift (19, 20) angeordnet, der in Kulissen (22, 23) eines Kulissenkörper (21) eingreift. Durch die Form und die radiale Lage der Kulissen (22, 23) wird die Bewegung der Kulissenstifte (19, 20) begrenzt und das Zusammenwirken der Schiebekörper (12, 13) mit dem mindestens einen Rastelelement (6, 7) verändert.

## Beschreibung

Die Erfindung betrifft eine Rotationskupplung mit Drehmomentenbegrenzung nach dem Oberbegriffs des Patentanspruchs 1.

Derartige Rotationskupplungen werden für zahlreiche Anwendungsfälle und Arbeitsgerätschaften benötigt, sei es für Eindrehwerkzeuge wie Schraubmaschinen, sei es für spanabhebende Werkzeuge wie Entgratungswerkzeuge, Bohr- und Gewindeschneidmaschinen, sei es für Preßwerkzeuge wie elektrische und elektro-hydraulische Maschinen zum Verpressen von Rohren, Muffen und Preßfittingen. Es geht dabei um den Schutz von Bedienungspersonen, Arbeitsgeräten, Werkzeugen und Werkstücken und nicht zuletzt darum, begonnene Arbeitsvorgänge sicher und zuverlässig zu Ende zu führen. Dieser Zwang besteht besonders beim Verpressen von Rohren, Muffen und Preßfittingen, um dauerhafte und dichte Rohrverbindungen herstellen zu können, insbesondere im Installations- und Sanitärbereich für Wasserleitungen und Heizungssysteme, die nach dem Verlegen nicht ohne großen Aufwand für Nachbesserungen zugänglich sind.

Durch die DE 197 20 699 A1 ist eine Rotationskupplung bekannt, bei der das an einem ersten Drehkörper festgelegte Rastelelement aus mindestens einer in Umfangsrichtung eingefrästen Rastnut besteht und bei der in einem zweiten Drehkörper mindestens ein topfförmiger Schiebekörper gelagert ist, der ein klinkenartiges Formschlußelement nach Art eines bistabil kippbaren doppelarmigen Hebels trägt, der in Vorwärtslage in die Rastnut(en) eingreift oder diese nach dem Umschalten in Rückwärtslage durchlauft. Mittels einer ersten vorgespannten Feder wird das eine, äußere, Ende des doppelarmigen Hebels nach dem Umschalten in Rückwärtslage ständig mit der vollen Kraft der vorgespannen ersten Feder alternierend über die Innenwand und durch die Rastnut(en) des ersten Drehkörpers geschleift, wenn auch unter Erzeugung eines geringeren Drehmoments. Die Schleifkraft kann zwar durch Verringerung der Federkraft gleichfalls verringert werden, allerdings ändert sich hierbei auch die Charakteristik der Kupplung bzw. deren Schaltverhalten.Das andere, innere Ende des doppelarmigen Hebels hat die Form und Funktion eines Nockens mit parabelförmiger Fläche und muß dabei ständig durch eine zweite vorgespannte Feder belastet sein, kann also nicht außer Eingriff mit den vorstehenden Reibungsflächen gebracht werden. Die zweite Feder ist im Innern der ersten Feder untergebracht und bedingt bei der Mehrzahl aller Ausführungsbeispiele mindestens einen weiteren Schiebekörper, der konzentrisch im Innen des ersten Schiebekörpers gelagert ist. Das bekannte Gerät benötigt nahezu ausschließlich teure Sonderteile, die gehärtet werden müssen, und ist wegen zahlreicher einzuhaltender Toleranzen kostspielig in der Herstellung einschließlich der Montage.

Durch die CH 613 754 A5 ist es bekannt, zwischen zwei Drehkörpern einer Überlastkupplung in koaxialer Lage einen federbelasteten hülsenförmigen Schiebekörper anzuordnen, der an seinem einen Ende Steuerflächen in Form von Rollen für den Eingriff in Rastvertiefungen des einen Drehkörpers und an seinem anderen Ende eine T-förmige Kulissenführung mit einem achsparallelen Steg und mit einem in Umfangsrichtung verlaufenden Querteil für den Eingriff eines radialen Querstiftes aufweist, der an dem jeweils anderen Drehkörper befestigt ist. Der Schiebekörper ist gegenüber den Rastvertiefungen unbegrenzt, gegenüber dem Querstift begrenzt verdrehbar. Diese begrenzte Verdrehbarkeit dient zu dem Zweck, den Querstift nach dem Ansprechen der Kupplung in dem jeweiligen, der Drehrichtung entsprechende Ende des Querteils der Kulissenführung und damit den Schiebekörper in ausgerückter Stellung festzuhalten, um ein dauerndes Ein- und Ausrasten der Rollen zu vermeiden. Dieses Festhalten kann durch eine Drehrichtungsumkehr automatisch wieder aufgehoben werden. Durch die koaxiale Bauweise bedingt, haben sowohl der Rastmechanismus als auch die Kulissenführung im Verhältnis zu einem die Kupplung umgebenden Gehäuse nur geringe radiale Abstände von der Rotationsachse, so daß wegen der vorgegebenen Drehmomente entsprechend hohe Flächenpressungen auftreten. Sämtliche Bauteile sind aufwendige Sonderkonstruktionen.

Durch die DE 28 27 948 A1 ist es bekannt, zwischen zwei teilweise konzentrisch angeordneten Drehkörpern einer Überlastkupplung federbelastete, radial bewegliche Rastkörper anzuordnen, die in entsprechende Rastausnehmungen des jeweils anderen Drehkörpers eingreifen. Die Rastkörper werden außer durch radiale Federn auch durch einen axial federbelasteten Schaltring gehalten, der mehrere axial ausgerichtete Ringnocken aufweist, die auf dem Umfang des Schaltringes unterbrochen sind. Die im Querschnitt dachförmigen Ringnocken greifen dabei im Einschaltzustand axial in entsprechende Nuten in den Rastkörpern ein. Beim Auftreten einer Überlast werden die Rastkörper nicht nur aus den radialen Nuten des einer Drehkörpers verdrängt, sondern rasten auch aus den axialen Ringnocken-Nut-Verbindnungen des Schaltrings aus und jenseits dieser wieder in einer Wartestellung ein, in der die Kupplungsverbindung durch entsprechende Abstimmung der axialen und radialen Feder(n) unterbrochen bleibt. Ein Wiedereinschalten durch Drehrichtungumkehr der angetriebenen Welle ist ausgeschlossen und nur gegen die Wirkung einer zusätzlichen, tangential wirkenden Feder durch besondere Betätigung des Schaltrings möglich, wofür mechanische Mittel (Werkzeuge), oder elektromagnetische Mittel (ein Schaltmagnet) angegeben sind. Es ist auch eine Zwischenstellung angegeben, in der ein ständiger Ratschvorgang erfolgt. Sämtliche Bauteile sind auch hierbei aufwendige Sonderkonstruktionen.

Der Erfindung liegt daher die Aufgabe zugrunde, eine Rotationskupplung der eingangs beschrieben Gattung anzugeben, für deren Herstellung zahlreiche am Markt verfügbare und bereits gehärtete Einzelteile verwendet werden können und bei der die Belastung der Gleitflächen beim Ratschvorgang nach dem Umschalten von der Schaltcharakteristik der Kupplung konstruktionsbedingt entkoppelbar ist.

Die Lösung der gestellten Aufgabe erfolgt bei der eingangs beschriebenen Rotationskupplung erfindungsgemäß durch die Merkmale im Kennzeichen des Patentanspruchs 1.

Durch den Erfindungsgegenstand wird die gestellte Aufgabe in vollem Umfange gelöst. Insbesondere können für dessen Herstellung zahlreiche am Markt verfügbare und bereits gehärtete Einzelteile wie Zylinderstifte verwendet werden, und die Belastung der Gleitflächen beim Ratschvorgang nach dem Umschalten ist von der Schaltcharakteristik der Kupplung konstruktionsbedingt entkoppelbar.

Beim Erfindungsgegenstand ist es jeder Schiebekörper selbst, der die erforderlichen Steuerflächen trägt, so daß es keiner bistabilen doppelarmigen Schalthebel mit komplizierter Raumform und einer zusätzlichen Feder bedarf, und die gewünschte Schaltcharakteristik kann nur mittels der Raumlage der Steuerflächen und der Kennlinie einer einzigen Druckfeder erreicht werden.

Natürlich ist der Kulissenkörper ein zusätzliches Bauteil. Durch dessen Raumform bzw. die Raumform und die radiale Lage der Kulissen hat man es aber in der Hand, die Belastung der Gleitflächen beim Ratschvorgang nach dem Umschalten von der Schaltcharakteristik der Kupplung zu entkoppeln. Dadurch ist es möglich, die Überschreitung des Grenzdrehmoments und das Umschalten der Kupplung unterschiedlich stark akustisch wahrnehmbar zu machen. Es ist sogar möglich, auf den Ratschvorgang völlig zu verzichten und dadurch den Verschleiß noch weiter zu reduzieren. Auf diese und zusätzliche Vorteile wird in der Detailbeschreibung noch näher eingegangen werden.

Es ist im Zuge weiterer Ausgestaltungen der Erfindung besonders vorteilhaft, wenn - entweder einzeln oder in Kombination -:
* die vorgespannte Feder aus einem Stapel von Tellerfedern besteht, die auf einem Zylinderzapfen geführt sind,
* der Kulissenkörper als Zylinderscheibe ausgeführt und mittels eines ersten konzentrischen Wellenstummels in dem einen Drehkörper und mittels eines zweiten konzentrischen Wellenstummeis in dem anderen Drehkörper gelagert ist,
* die Kulissen als Winkelnuten ausgebildet sind, deren einer Schenkel radial und deren anderer Schenkel in Preßrichtung voreilend im wesentlichen tangential ausgerichtet ist, oder wenn
* die Kulissen als T-förmige Nuten ausgebildet sind, deren Steg radial, und deren eine Flanschseite in Preßrichtung voreilend im wesentlichen tangential ausgebildet und deren andere Flanschseite in Preßrichtung nacheilend im wesentlichen tangential ausgerichtet sind,
* der Kulissenkörper mindestens einen Bremskörper besitzt, der sich auf einer Innenfläche des jeweils anderen Drehkörpers abstützt, insbesondere wenn der mindestens eine Bremskörper als gehärtete Stahlkugel ausgeführt ist, die durch eine Druckfeder belastet in je einer radialen Bohrung des Kulissenkörpers gelagert ist.

Weitere vorteilhafte Ausgestaltungen des Erfindungsgegenstandes ergeben sich aus den übrigen Unteransprüchen.

Ein Ausführungsbeispiel, seine Funktionen und Variationsmöglichkeiten werden nachfolgend anhand der Figuren 1 bis 7 näher erläutert.

Es zeigen:
- Figur 1: einen Axialschnitt durch eine vollständig montierte Rotationskupplung in der sogenannten Überlaufstellung,
- Figur 2: einen Radialschnitt durch den Gegenstand von Figur 1 entlang der Linie II-II,
- Figur 3: eine Explosionsdarstellung des Gegenstandes nach den Figuren I und II,
- Figur 4: einen Radialschnitt durch einen Kulissenkörper mit zwei Kulissenstiften nach den Figuren I und III - zu Erläuterungszwecken in einer Zwischenstellung,
- Figur 5: einen Radialschnitt durch einen modifizierten Kulissenkörper mit zwei Kulissenstiften - zu Erläuterungszwecken in einer Zwischenstellung,
- Figur 6: einen Radialschnitt durch den Gegenstand von Figur 1 entlang der Linie II-II in der sogenannten Mitnahmestellung bei der Momentenübertragung, und
- Figur 7: einen Radialschnitt durch einen Kulissenkörper nach den Figuren I und III mit zwei Kulissenstiften in der sogenannten Mitnahmestellung bei der Momentenübertragung.

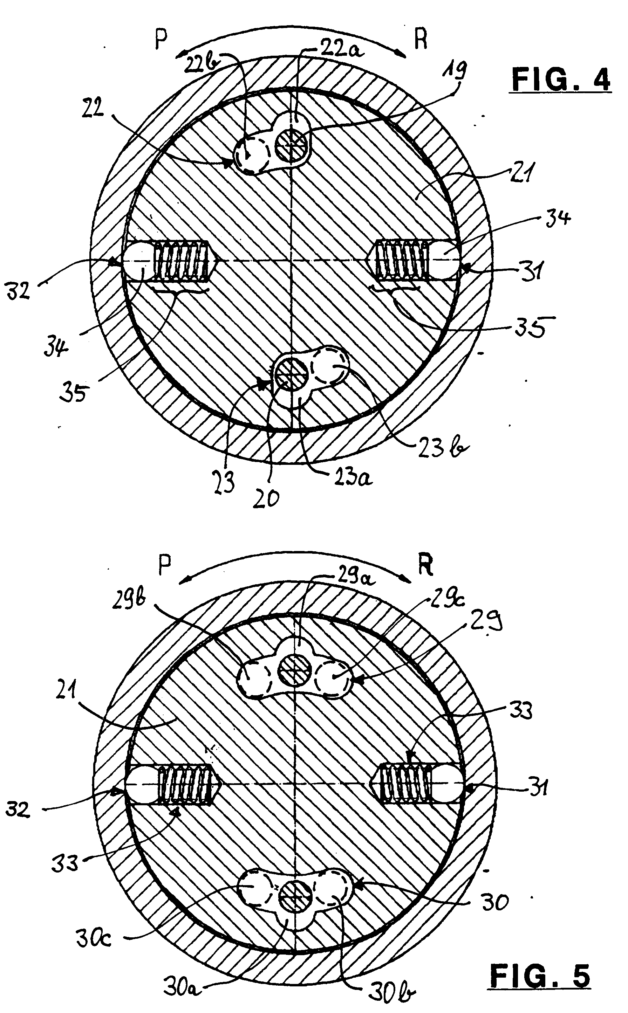

In den Figuren 4 bis 7 ist die Drehrichtung mit "P" für einen Preßvorgang und mit "R" für einen Rückzugsvorgang bei Verwendung der Rotationskupplung in einem nicht gezeigten Preßwerkzeug angegeben. Die eingezeichneten Richtungsangaben "R" und "P" beziehen sich auf die Drehrichtung des Antriebsdrehkörpers.

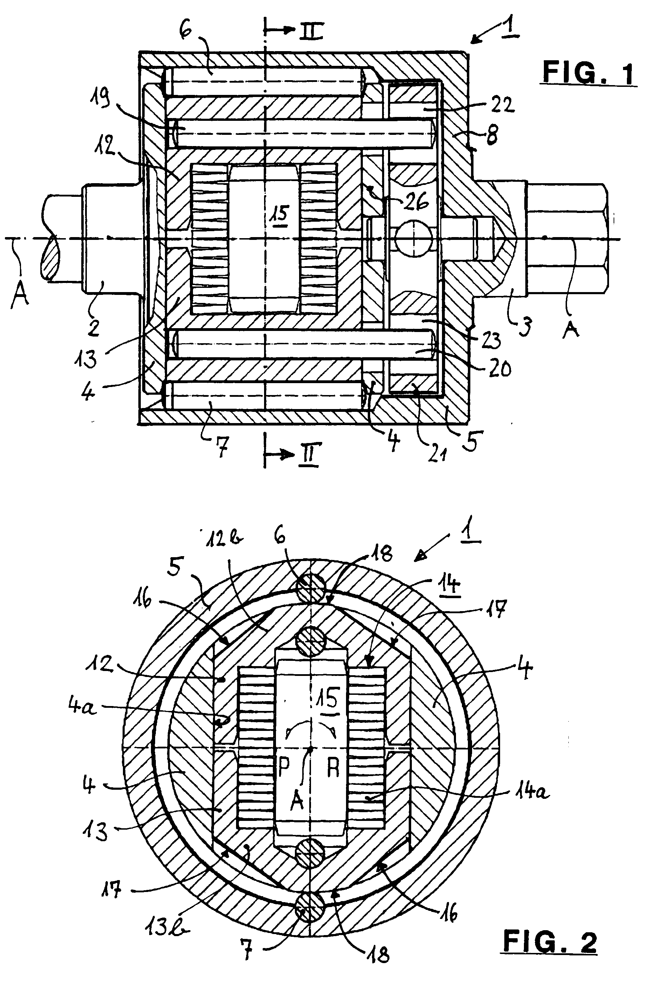

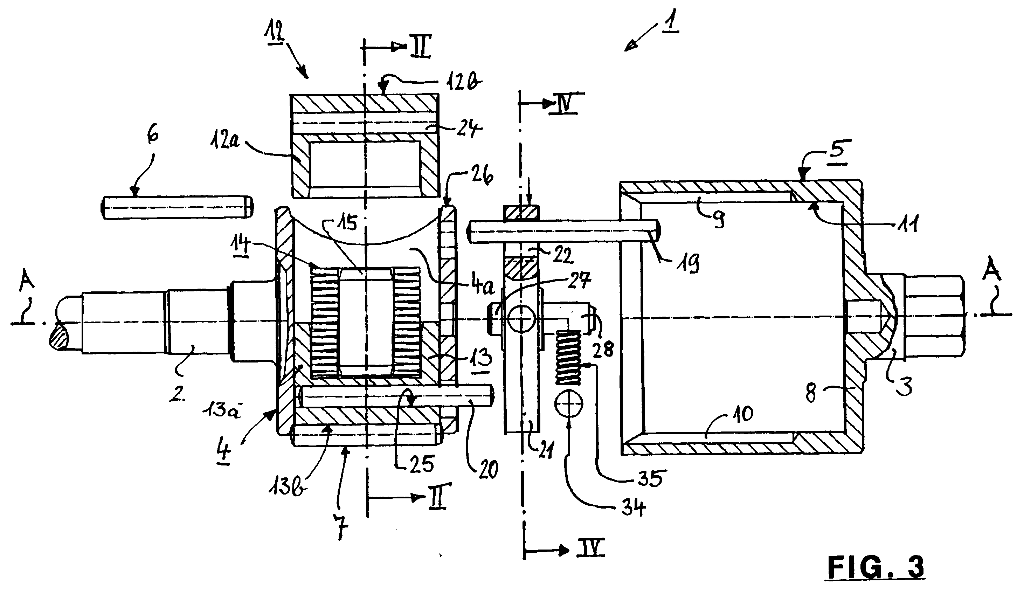

In den Figuren 1, 2 und 3 ist eine Rotationskupplung 1mit einer Antriebswelle 2 und einer Abtriebswelle 3 und mit einem Antriebsdrehkörper 4 und einem Abtriebsdrehkörper 5 gezeigt, wobei die Antriebswelle 2 und die Abtriebswelle 3 nicht notwendigerweise einstückig mit den Drehkörpern 4 und 5 ausgeführt sein müssen.

An dem Abtriebsdrehkörper 5 sind - auf dem Umfang äquidistant verteilt - zwei Rastelelemente 6 und 7 angeordnet, und zwar ist der Abtriebsdrehkörper 5 als Hohlzylinder mit einer Stirnwand 8 ausgebildet, und die beiden Rastelelemente 6 und 7 sind als gehärtete Zylinderstifte ausgebildet und achsparallel in etwa halbzylindrischen Ausnehmungen 9 und 10 der zylindrischen Innenfläche 11 des Drehkörpers gelagert.

An dem anderen Drehkörper, dem Antriebsdrehkörper 4, sind zwei Schiebekörper 12 und 13 gelagert, die aus je einer hohlzylindrischen Zarge 12a und 13a zur Führung und aus je einem Steuerkopf 12b und 13b bestehen, auf dessen Ausbildung und Funktion nachstehend noch näher eingegangen wird. Zum Zwecke der Lagerung und Führung besitzt der Antriebsdrehkörper 4 einen radial durchgehenden Hohlraum 4a, in dem die beiden Schiebekörper 12 und 13 gegenläufig verschiebbar gelagert sind. Im vorliegenden Fall verlaufen Kraft- und Verschiebewege genau radial.

Mittels einer vorgespannten Feder 14, die aus einem Stapel von Tellerfedern 14a besteht, die auf einem Zylinderzapfen 15 geführt sind, werden die Schiebekörper 12 und 13 mit einer auf die Rastelelemente 6 und 7 zu gerichteten Weg- und Kraftkomponente verschoben und wirken dadurch mit den Rastelelementen 6 und 7 zusammen.

Dies geschieht dadurch, daß jeder Schiebekörper 12 und 13 je eine vorwärtswirkende ebene Steuerfläche 16 und je eine ebene rückwärtswirkende Steuerfläche 17 aufweist, zwischen denen sich jeweils eine teilzylindrische Überlauffläche 18 befindet. Dadurch sind alle Steuerflächen 16 und 17 nach Maßgabe ihrer Steigungen bzw. ihrer Anstellwinkel "α" und "β", der Kennlinie der Feder 14 und der Oberflächengeometrie der Rastelemente 6 und 7 jeweils drehmomentenabhängig mit diesen in Berührung bringbar. Dadurch wird das Auslösemoment bei Überlast bestimmt.

In jedem der Schiebekörper 12 und 13 ist lagefest ein zylindrischer Kulissenstift 19 und 20 angeordnet, der aus gehärtetem Stahl besteht, aus seinem Schiebekörper 12 bzw. 13 vorsteht und mit dem vorstehenden Ende in einen von diesen mitschleppbaren Kulissenkörper 21 eingreift, der für jeden Kulissenstift 19 bzw. 20 eine Kulisse 22 und 23 aufweist, die die Bewegungskomponenten der Kulissenstifte 19 und 20 derart begrenzt, daß nach Maßgabe der relativen Winkelstellung zwischen dem Kulissenkörper 21 und dem zugehörigen Drehkörper, im vorliegenden Fall dem Antriebsdrehkörper 4, das Zusammenwirken der Schiebekörper 12 und 13 mit den beiden Rastelelementen 6 und 7 veränderbar ist.

Die Kulissenstifte 19 und 20 sind möglichst weitgehend spielfrei in je einer achsparallelen Bohrung 24 und 25 eines jeden Schiebekörpers 12 und 13 angeordnet und mit radialem Spiel durch eine Stirnwand 26 des zugehörigen Drehkörpers, im dargestellten Fall des Antriebsdrehkörpers 4 hindurchgeführt.

Der Kulissenkörper 21 ist als Zylinderscheibe ausgeführt und mittels eines ersten konzentrischen Wellenstummels 27 im Antriebsdrehkörper 4 und mittels eines zweiten konzentrischen Wellenstummels 28 im Abtriebsdrehkörper 5 gelagert.

Wie aus Figur 4 hervorgeht, sind die Kulissen 22 und 23 als Winkelnuten ausgebildet, deren einer Schenkel 22a bzw. 23a radial und deren anderer Schenkel 22b bzw. 23b in Preßrichtung voreilend im wesentlichen tangential ausrichtet ist.

Figur 5 zeigt eine Variante dieser Kulissenform, nämlich Kulissen 29 bzw. 30 in Form von T-förmigen Nuten, deren Stege 29a bzw. 30a radial, und deren eine Flanschseite 29b bzw. 30b in Preßrichtung voreilend im wesentlichen tangential ausgebildet und deren andere Flanschseite 29c bzw. 30c in Preßrichtung nacheilend im wesentlichen tangential ausgerichtet sind.

Gemäß den Figuren 4 bis 7 besitzt der als Zylinderscheibe ausgebildetete Kulissenkörper 21 in äquidistanter Verteilung auf dem Umfang zwei Bremskörper 31 und 32, die sich auf der zylindrischen Innenfläche 11 des Abtriebsdrehkörpers 5 abstützen. Die Bremskörper 31 und 32 sind als gehärtete Kugeln ausgeführt, die federbelastet in je einer radialen Bohrung 33 der Zylinderscheibe gelagert sind.

Die Arbeitsweise der Rotationskupplung nach den Figuren 1 bis 4 wird wie folgt erläutert:

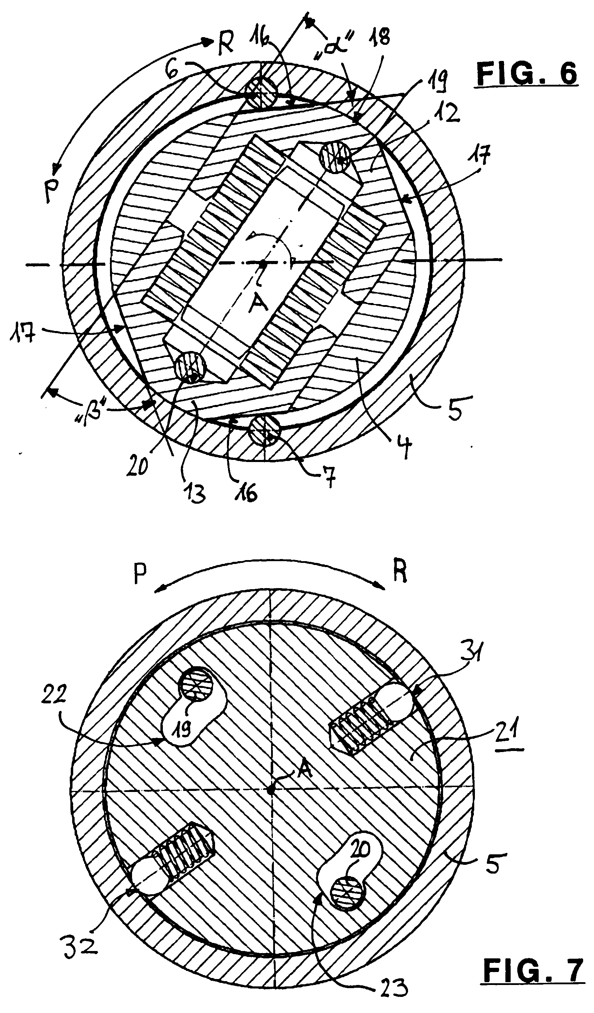

Wie speziell aus Figur 6 hervorgeht, sind die vor- und rückwärts wirkenden Steuerflächen 16 bzw. 17 der Schiebekörper 12 bzw. 13 als schiefe Ebenen mit den Anstellwinkeln "α" und "β" zu den - radialen - Verschieberichtungen der Schiebekörper ausgebildet. Dabei sind die Anstellwinkel "α" und "β" nach Maßgabe der Federauslegung und der gewünschten maximalen Vor- und Rückwärtsdrehmomente ausgewählt, sie können gleich oder verschieden sein.

In Figur 6 liegen die Steuerflächen 16 an den Rastelementen 6 und 7 an. Die Antriebsleistung wird übertragen. Gemäß Figur 7 liegen hierbei die Kulissenstifte 19 und 20 an den Enden der radialen Schenkel 22a und 23a der Kulissen 22 und 23 an: Der Kulissenkörper wird gegen die Reibungskräfte der Bremskörper 31 und 32 mitgeschleppt, die aus je einer Stahlkugel 34 und einer Druckfeder 35 bestehen..

Steigt jetzt das Drehmoment - z.B. am Ende eines Preßvorgangs - übermäßig an, so gleiten die Steuerflächen 16 unter Zusammenschiebung der Schiebekörper 12 und 13 gegen die Wirkung der Feder 14 auf den Rastelementen 6 und 7, bis die Stellung gemäß den Figuren 1 und 2 erreicht ist, in der die Rastelemente 6 und 7 - vorübergehend - auf die teilzylindrischen Überlaufflächen 18 drücken.

Mit den Schiebekörpern 12 und 13 werden auch die in ihnen gelagerten Kulissenstifte 19 und 20 radial einwärts geschoben, bis sie - vorübergehend - die in Figur 4 ausgezogen gezeichnete Stellung im Scheitel der Kulissen 22 und 23 einnehmen. Da der Kulissenkörper 21 hierbei jedoch laufend gebremst wird, geraten die Kulissenstifte 19 und 20 in die etwa tangential verlaufenden Schenkel 22b und 23b der Kulissen 22 und 23, aus denen sie sich ohne Drehrichtungsumkehr nicht mehr befreien können. Diese Lage der Kulissenstifte 19 und 20 ist in Figur 4 gestrichelt dargestellt.

Durch entsprechende Wahl des radialen Abstandes der tangentialen Abschnitte der Kulissen 22/23 bzw. 29/30 von der Rotationsachse A-A bzw. A wird erreicht, daß die Schiebekörper 12 und 13 ohne Drehrichtungsumkehr nur um ein vorgegebenes Maß - oder gar nicht - gegen die Rastelemente 6 und 7 verschoben werden können, so daß die Rotationskupplung nach dem ersten Ausläsevorgang nicht mehr bei jeder halben Umdrehung das volle Drehmoment überwinden muß, was einen gewissen Verschleiß mit sich bringen würde. Man hat es aber konstruktiv durchaus in der Hand, daß noch ein Teilumfang der Steuerflächen 16 (oder beim Rücklauf der Steuerflächen 17) auf die Rastelemente 6 und 7 auftrifft, was sich in einem mehr oder weniger starken knarrenden Geräusch äußert, so daß die Bedienungsperson auch bei Umgebungsgeräuschen erkennen kann, daß das maximale Drehmoment erreicht wurde, was für zahlreiche Arbeitsvorgänge entscheidend ist.

Bei der Ausführungsform des Kulissenkörpers nach Figur 5 läßt sich die vorstehend beschriebene Wirkung auch im Rückwärtsgang erreichen, wobei die Einstellung in beiden Drehrichtungen auch unterschiedlich sein kann.

### Bezugszeichenliste:

- 1: Rotationskupplung
- 2: Antriebswelle
- 3: Abtriebswelle
- 4: Antriebsdrehkörper
- 4a: Hohlraum
- 5: Abtriebsdrehkörper
- 6: Rastelement
- 7: Rastelement
- 8: Stirnwand
- 9: Ausnehmung
- 10: Ausnehmung
- 11: zyl. Innenfläche
- 12: Schiebekörper
- 12a: Zarge
- 12b: Steuerkopf
- 13: Schiebekörper
- 13a: Zarge
- 13b: Steuerkopf
- 14: Feder
- 14a: Tellerfedern
- 15: Zylinderzapfen
- 16: Steuerfläche
- 17: Steuerfläche
- 18: Überlauffläche
- 19: Kulissenstift
- 20: Kulissenstift
- 21: Kulissenkörper
- 22: Kulisse
- 22a: radialer Schenkel
- 22b: tangentialer Schenkel
- 23: Kulisse
- 23a: radialer Schenkel
- 23b: tangentialer Schenkel
- 24: Bohrung
- 25: Bohrung
- 26: Stirnwand
- 27: Wellenstummel
- 28: Wellenstummel
- 29: Kulisse
- 29a: Steg
- 29b: Flanschseite
- 29c: Flanschseite
- 30: Kulisse
- 30a: Steg
- 30b: Flanschseite
- 30c: Flanschseite
- 31: Bremskörper
- 32: Bremskörper
- 33: Bohrung
- 34: Stahlkugel
- 35: Druckfeder.
- A, A-A: Rotationsachse
- "α": Anstellwinkel
- "β": Anstellwinkel

## Patentansprüche

1. Rotationskupplung mit einer Achse A-A und mit einer Drehmomentenbegrenzung zwischen einer Antriebswelle (2) und einer Abtriebswelle (3), mit einem Antriebsdrehkörper (4) und einem Abtriebsdrehkörper (5), wobei der eine Drehkörper (5) mindestens ein Rastelelement (6, 7) und der andere Drehkörper (4) mindestens einen Schiebekörper (12, 13) aufweist, der mittels einer vorgespannten Feder (14) gegen das Rastelelement (6, 7) beweglich ist, wobei der mindestens eine Schiebeköper (12, 13) durch eine Kulissenführung derart wegbegrenzt ist, daß nach Maßgabe der relativen Winkelstellung zwischen der Kulissenführung und dem zugehörigen Drehkörper (5) das Zusammenwirken der Schiebekörper (12, 13) mit dem mindestens einen Rastelelement (6, 7) veränderbar ist, und wobei die Wegbegrenzung des mindestens einen Schiebekörpers (12, 13) durch eine Drehrichtungsumkehr aufhebbar ist,
**dadurch gekennzeichnet**, daß
a) das mindestens eine Rastelelement (6, 7) als gehärteter Zylinderstift ausgebildet und achsparallel in einer Innenfläche (11) des einen Drehkörpers (5) gelagert ist,
b) der jeweils andere Drehkörper (4) einen senkrecht zur Achse A-A ausgerichteten Hohlraum (4a) aufweist, in dem der mindestens eine Schiebekörper (12, 13) radial beweglich gelagert ist, und daß
c) in einer achsparallelen Bohrung (24, 25) des mindestens einen Schiebekörpers (12, 13) ein aus diesem vorstehender Kulissenstift (19, 20) angeordnet ist, der in einen Kulissenkörper (21) eingreift, der begrenzt und relativ zu jedem Kulissenstift (19, 20) verdrehbar ist und für jeden Kulissenstift (19, 20) eine Kulisse (22, 23; 29, 30) aufweist, die die radialen Bewegungskomponenten der Schiebekörper (12, 13) begrenzt.

2. Rotationskupplung nach Anspruch 1, **dadurch gekennzeichnet,** daß in dem radial durchgehenden Hohlraum (4a) zwei Schiebekörper (12, 13) gegenläufig verschiebbar gelagert sind.

3. Rotationskupplung nach Anspruch 1, **dadurch gekennzeichnet,** daß die vorgespannte Feder (14) aus einem Stapel von Tellerfedern (14a) besteht, die auf einem Zylinderzapfen (15) geführt sind.

4. Rotationskupplung nach Anspruch 1, **dadurch gekennzeichnet,** daß der mindestens eine Schiebekörpers (12, 13) vor- und rückwärts wirkende Steuerflächen (16, 17) aufweist, die als schiefe Ebenen mit Anstellwinkeln "α" und "β" zu den Verschieberichtungen des Schiebekörpers (12, 13) ausgebildet sind.

5. Rotationskupplung nach Anspruch 4, **dadurch gekennzeichnet,** daß die Anstellwinkel "α" und "β" nach Maßgabe der Federauslegung und der gewünschten maximalen Vor- und Rückwärtsdrehmomente ausgewählt sind.

6. Rotationskupplung nach Anspruch 1, dadurch gekennzeichnet, daß der Kulissenstift (19, 20) als gehärteter Zylinderstift ausgeführt ist.

7. Rotationskupplung nach Anspruch 1, **dadurch gekennzeichnet,** daß der Kulissenkörper (21) zwischen den Drehkörpern (4, 5) angeordnet ist.

8. Rotationskupplung nach einem der Ansprüche 1 und 7, **dadurch gekennzeichnet,** daß der Kulissenkörper (21) als Zylinderscheibe ausgeführt und mittels eines ersten koaxialen Wellenstummels (27) in dem einen Drehkörper (4) und mittels eines zweiten koaxialen Wellenstummels (28) in dem anderen Drehkörper (5) gelagert ist.

9. Rotationskupplung nach Anspruch 7, **dadurch gekennzeichnet,** daß die Kulissen (22, 23) als Winkelnuten ausgebildet sind, deren einer Schenkel (22a, 23a) radial und deren anderer Schenkel (22b, 23b) in Preßrichtung voreilend im wesentlichen tangential ausrichtet ist.

10. Rotationskupplung nach Anspruch 7, **dadurch gekennzeichnet,** daß die Kulissen (29, 30) als T-förmige Nuten ausgebildet sind, deren Steg (29a, 30a) radial, und deren eine Flanschseite (29b, 30b) in Preßrichtung voreilend im wesentlichen tangential ausgebildet und deren andere Flanschseite (29c, 30c) in Preßrichtung nacheilend im wesentlichen tangential ausgerichtet sind.

11. Rotationskupplung nach Anspruch 1, **dadurch gekennzeichnet,** daß der Kulissenkörper (21) mindestens einen Bremskörper (31, 32) besitzt, der sich auf einer Innenfläche (11) des jeweils anderen Drehkörpers (5) abstützt.

12. Rotationskupplung nach Anspruch 11, **dadurch gekennzeichnet,** daß der mindestens eine Bremskörper (31, 32) als gehärtete Stahlkugel (34) ausgeführt ist, die durch eine Druckfeder (35) belastet in je einer radialen Bohrung (33) des Kulissenkörpers (21) gelagert ist.
